# EUROPEAN PATENT APPLICATION

(11) **EP 4 748 644 A1**
(43) Date of publication of application: **27.05.2026**
(21) Application number: 25216924.8
(22) Date of filing: 19.11.2025
(51) Int. Cl.: B60N 2/90, B60J 7/22

(54) **ROAD-USE MOTOR VEHICLE AND AUTOMOTIVE SEAT**

(30) Priority: 20.11.2024 IT 202400026118
(71) Applicant: FERRARI S.p.A., 41100 Modena (IT)
(72) Inventor: SEDDA, Salvatore, 41100 MODENA (IT); BERTI, Andrea, 41100 MODENA (IT)
(74) Representative: Studio Torta S.p.A.

(57) **Abstract**

Road-use motor vehicle (1) comprising: a vehicle-body (2) which is provided with a plurality of ground resting wheels (6, 7) and a passenger compartment (3) open at the top; and at least one seat (11, 12), which is located within the passenger compartment (3) and is adapted to accommodate and support a person in a seated position; the seat (11, 12) being provided with a substantially horizontal seat-base (14) and a backrest (15), which rises from the rear edge of the seat-base (14) in the nearby of a rear bulkhead (10) of the vehicle-body (2), which contributes to delimiting said passenger compartment (3); the motor vehicle (1) being provided additionally with a barrier wall (20), which extends between the backrest (15) of the seat (11, 12) and the rear bulkhead (10) of the vehicle-body (2), so as to hamper the air circulation in the space between the backrest (15) and the rear bulkhead (10).

## Description

### CROSS-REFERENCE TO RELATED APPLICATIONS

This patent application claims priority from Italian patent application No. 102024000026118 filed on November 20, 2024, the entire disclosure of which is herein incorporated by reference.

### TECHNICAL FIELD

The present invention relates to a road-use motor vehicle and to an automotive seat.

More in detail, the present invention relates to a high-performance convertible car and to the seats thereof, to which the following disclosure will make explicit reference without thereby losing in generality.

### BACKGROUND ART

As is known, convertible cars are motor vehicles for transporting people, in which the roof of the passenger compartment has an at least partially removable or foldable structure, so as to allow the occupants to drive in the open air.

Unfortunately, in the absence of the roof and rear window, the airflow that laps the vehicle while driving, immediately after passing the windscreen of the vehicle, tends to enter within the passenger compartment due to the low-pressure zone that naturally forms within the passenger compartment, with all the comfort problems that this entails.

This phenomenon moreover increases in intensity as the speed of the vehicle increases and is notoriously more intense in cars that are provided with a relatively high and little inclined windscreen.

To at least partially overcome this drawback, some manufacturers of this type of cars have decided to place, on the upper edge of the windscreen, a deflecting spoiler which is able to limit the entry of the airflow inside the passenger compartment.

Despite this measure aimed at hindering the formation of disturbed airflows inside the passenger compartment, some users of high-performance convertible cars have nevertheless reported the formation, around the seats inside the passenger compartment, of abnormal highly disturbed airflows.

The applicant thus conducted experimental tests in the wind tunnel from which it emerged that these abnormal highly-disturbed airflows around the seats are caused by the air entering the interior of the passenger compartment from the upper edge of the side windows of the vehicle, and are all the more intense the more the side windows are lowered.

In addition, from these experimental tests it emerged that these highly-disturbed airflows around the seats reach such an intensity to be a significant disturbance for the vehicle occupants (only) when the driver's and/or passenger's seat is/are spaced from the rear wall of the passenger compartment.

A fluid-dynamic analysis then identified the reasons that trigger this unpleasant phenomenon inside the passenger compartment. If the driver's and/or passenger's seat is spaced from the rear wall of the passenger compartment, the airflows lapping the vehicle, after passing the windscreen or side window, creep into the empty space between the backrest of the seat and the vertical rear wall of the passenger compartment, are diverted towards the centre of the vehicle by the rear wall of the passenger compartment, and finally are diverted back towards the windscreen by the central tunnel that extends longitudinally between the two seats, thus generating a swirling motion around the backrest of the seat.

### SUMMARY OF THE INVENTION

Aim of the present invention is to counteract the birth of these swirling airflows inside the passenger compartment of the convertible cars, when the driver's and/or passenger's seat is spaced from the rear wall of the passenger compartment.

In accordance with the above aims, according to the present invention there is realized a road-use motor vehicle as defined in Claim 1 and preferably, though not necessarily, in any one of the claims depending on it**.**

Furthermore, according to the present invention there is realized an automotive seat as defined in Claim 9 and preferably, though not necessarily, in any one of the claims depending on it.

### BRIEF DESCRIPTION OF THE DRAWINGS

The present invention will now be described with reference to the attached drawings, which show a non-limiting embodiment thereof, wherein:
- Figure 1 is a partially exploded perspective view of a road-use motor vehicle realized according to the teachings of the present invention, with parts removed for clarity's sake;
- Figure 2 is a second partially exploded perspective view of the motor vehicle shown in Figure 1, with parts removed for clarity's sake;
- Figure 3 is a schematic side view of the motor vehicle shown in the previous figures, with parts in section and parts removed for clarity's sake;
- Figure 4 is a schematic side view of a different embodiment of the motor vehicle shown in the previous figures, with parts in section and parts removed for clarity's sake; whereas
- Figure 5 is a side view of a variant of the automotive seats mounted on the motor vehicle shown in the previous Figures.

### DETAILED DESCRIPTION OF THE EMBODIMENTS

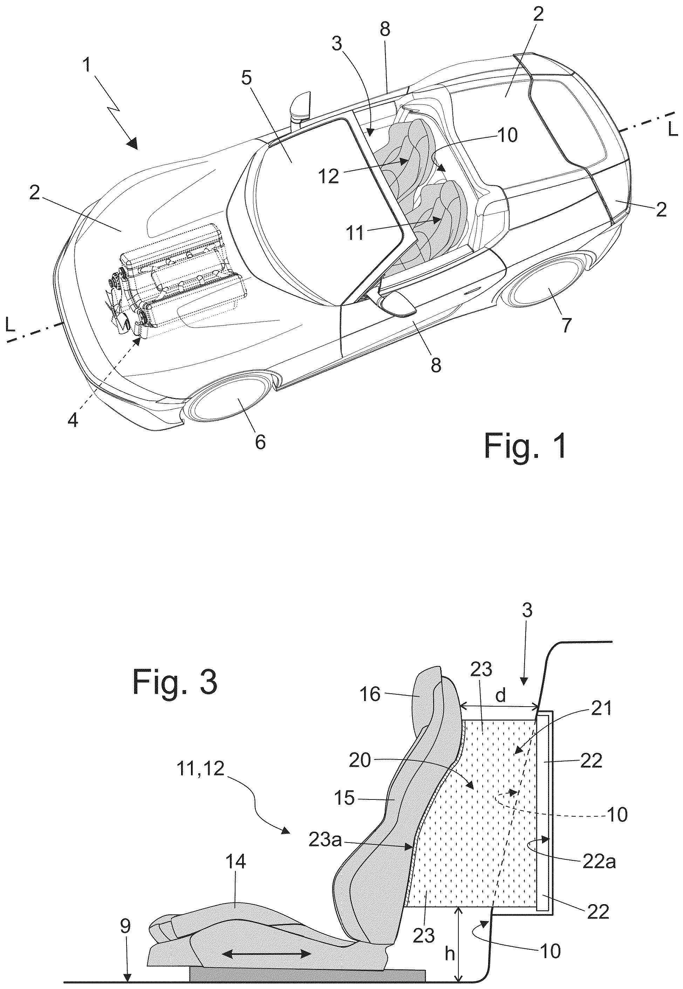

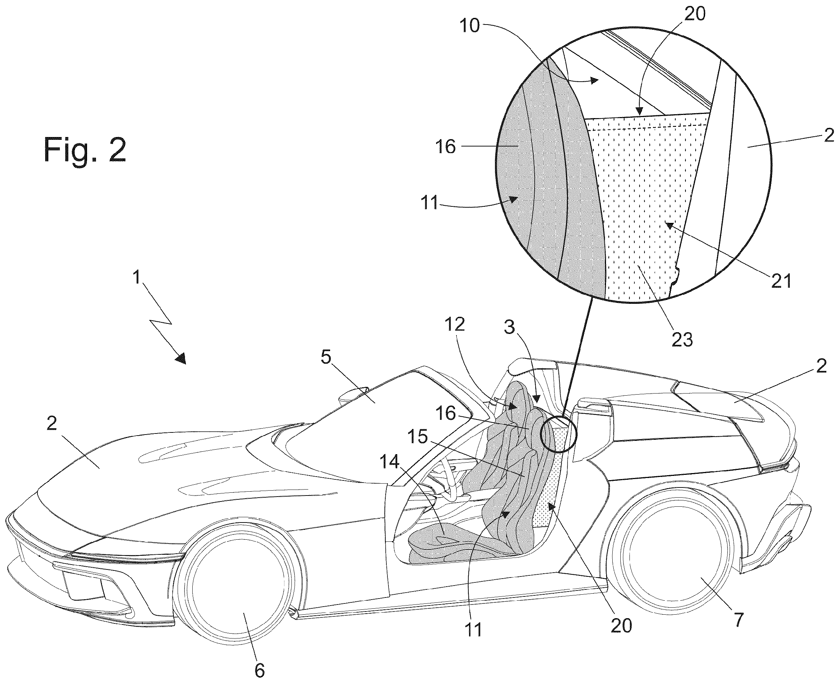

With reference to Figures 1 and 2, number 1 denotes as a whole a road-use motor vehicle with an open passenger compartment, advantageously of the convertible type.

In other words, the motor vehicle 1 comprises: a rigid vehicle-body 2 preferably with self-supporting structure, which rests on the ground by means of a plurality of ground resting wheels, and is provided with a superiorly-opened passenger compartment 3, which is structured and dimensioned so as to accommodate at least the driver of the vehicle (i.e. the person driving the road vehicle); and a powertrain 4, which is located on the vehicle-body 2, or more advantageously inside the vehicle-body 2, and is adapted to drive into rotation at least one or, more conveniently, at least a pair of ground-resting wheels.

More in detail, the passenger compartment 3 is preferably recessed in a section of the vehicle-body 2 and accommodates, inside itself, the steering wheel, the dashboard, the pedal set and, more generally, the instrumentation necessary for driving the vehicle.

In addition, the motor vehicle 1 is preferably also provided with a front windscreen 5, which protrudes cantilevered from the vehicle-body 2 immediately upstream of the passenger compartment 3, and is shaped and dimensioned so as to protect, when the motor vehicle 1 moves forward at high speed, the person(s) inside the passenger compartment 3 from the outside air.

Preferably, the motor vehicle 1 may further comprise a removable roof (not visible in the figures) that, if necessary, is adapted to be temporarily arranged above the passenger compartment 3, to cover and protect the passenger compartment 3 and the occupant(s) thereof.

More in detail, the removable roof is preferably structured so as to selectively join with the upper edge of the windscreen 5, forming a cover that extends more or less horizontally for the entire length of the passenger compartment 3, and can optionally be folded or stored in a compartment specially made in the vehicle-body 2, behind the passenger compartment 3.

Clearly, the removable roof could also be a completely separate and distinct piece from the vehicle-body 2, so as to be, if necessary, entirely removed from the vehicle-body 2.

With reference to Figures 1 and 2, in particular, the vehicle-body 2 is preferably oblong in shape, and preferably rests on the ground by means of at least one pair of front ground-resting wheels 6 and at least one pair of rear ground-resting wheels 7, which are advantageously arranged on opposite sides of the passenger compartment 3 along the vehicle longitudinal axis L.

More in detail, the front wheels 6 and the rear wheels 7 are preferably arranged on the vehicle-body 2 in pairs on opposite sides of the vehicle vertical midplane, advantageously substantially at the vertices of a rectangle or an isosceles trapezoid.

In addition, the front wheels 6 are preferably idle and steering wheels, whereas the rear wheels 7 are preferably driving and optionally also steering wheels.

In other words, the powertrain 4 is preferably adapted to drive into rotation only the rear wheels 7.

In a different embodiment, however, the powertrain 4 could be adapted to drive into rotation the front wheels 6 in addition to, or in place of, the rear wheels 7.

In other words, the front wheels 6 could be driving wheel in addition to, or in place of, the rear wheels 7.

With reference to Figures 1, 2 and 3, moreover, the passenger compartment 3 is preferably arranged roughly in the centre of the vehicle-body 2 and/or astride the vehicle vertical midplane, and is preferably structured and dimensioned so as to accommodate the driver of the vehicle and a (single) passenger advantageously arranged alongside the same driver.

Preferably, the vehicle-body 2 is moreover provided with a pair of movable access doors 8 that are arranged along the lateral sides of the vehicle-body 2, on opposite sides of the passenger compartment 3, and are structured and dimensioned so as to allow a person to easily access/enter inside the passenger compartment 3.

More in detail, the passenger compartment 3 is located inside a concave section of the vehicle-body 2 advantageously with a basin structure, which is inferiorly delimited by a substantially horizontal floor 9. The passenger compartment 3, or rather the concave section of the vehicle-body 2, is furthermore longitudinally delimited by a transversal front wall or bulkhead (not visible in the figures) and by a transversal rear wall or bulkhead 10, which are suitably spaced along the vehicle longitudinal axis L and are advantageously seamlessly joined with the floor 9.

In other words, the front bulkhead and the rear bulkhead 10 of the vehicle-body 2 are facing and spaced apart from each other.

Preferably, the access doors 8 of the vehicle-body 2, on the other hand, extend in a bridge-like manner between the front bulkhead and the rear bulkhead 10 of the same vehicle-body 2, and are advantageously flag hinged to the upright that flanks the transversal front bulkhead of the vehicle-body 2 so as to rotate about a substantially vertical, rotation axis.

With reference to Figures 1, 2 and 3, in addition the motor vehicle 1 comprises at least one automotive seat, which is shaped and structured so as to accommodate and support a person in a seated position, and is located within the passenger compartment 3, preferably locally substantially aligned with the steering wheel, the dashboard, the pedal set and, more generally, the instrumentation necessary for driving the vehicle.

More in detail, the motor vehicle 1 preferably comprises: a first automotive seat 11, which is adapted to accommodate the driver of the vehicle, and is firmly fixed to the vehicle-body 2, or rather to the floor 9 of the vehicle-body, longitudinally aligned with the steering wheel, the dashboard, the pedal set and, more generally, the instrumentation necessary for driving the vehicle; and advantageously also a second automotive seat 12, which is adapted to accommodate a (single) passenger, and is firmly fixed to the vehicle-body 2, or rather to the floor 9 of the vehicle-body 2, spaced alongside the seat 11.

In the example shown, in particular, the seats 11 and 12 are preferably located within the passenger compartment 3, on opposite sides of the vehicle vertical midplane.

Preferably, the automotive seat 11 and/or the automotive seat 12 is/are moreover rigidly fixed to the vehicle-body 2, or rather to the floor 9 of the vehicle-body, with the capability of varying/adjusting its own position inside the passenger compartment 3 between a forward position and a backward position.

In the forward position (see Figures 2 and 3), the automotive seat 11, 12 is located at the maximum distance from the rear bulkhead 10 of the vehicle-body 2 and/or at the minimum distance from the steering wheel, the dashboard, the pedal set and, more generally, from the instrumentation necessary for driving the vehicle.

In the backward position (see Figure 1), on the other hand, the automotive seat 11, 12 is located at the minimum distance from the rear bulkhead 10 of the vehicle-body 2 and/or at the maximum distance from the steering wheel, the dashboard, the pedal set and, more generally, from the instrumentation necessary for driving the vehicle.

More in detail, the automotive seat 11, 12 is preferably rigidly fixed to the vehicle-body 2, or rather to the floor of the vehicle-body 2, with the capability of moving longitudinally, i.e. parallel to the vehicle longitudinal axis L, between said forward position and said backward position.

In other words, the automotive seat 11, 12 is preferably fixed on the vehicle-body 2, or rather on the floor 9 of the vehicle-body 2, with the capability of adjusting/varying its distance d from the rear bulkhead 10 of the vehicle-body 2.

More in detail, the automotive seat 11 and/or the automotive seat 12 is/are preferably rigidly fixed on the vehicle-body 2, or rather on the floor of the vehicle-body 2, with the interposition of an advantageously electrically- or manually- operated, a longitudinal-position adjusting mechanism which is structured so as to move/shift the entire seat on the vehicle-body 2 longitudinally, i.e. parallel to the vehicle longitudinal axis L, between said forward position and said backward position.

In the example shown, in particular, the seats 11 and 12 are both rigidly fixed on the vehicle-body 2, or rather on the floor 9 of the vehicle-body, with the capability of moving longitudinally between said forward position and said backward position.

With reference to Figures 2 and 3, in particular, the or each automotive seat 11, 12 has an L-shaped structure and comprises: a seat-base 14, which is firmly fixed to the vehicle-body 2, or rather to the floor 9 of the vehicle-body, in a substantially horizontal position, advantageously with the capability of longitudinally moving back and forth on the vehicle-body 2, i.e. parallel to the vehicle longitudinal axis L; and a backrest 15, which rises from the rear edge of the seat-base 14 in a substantially vertical direction, in the nearby of the rear bulkhead 10 of the vehicle-body 2, and is rigidly fixed to the seat-base 14, advantageously with the interposition of an advantageously electrically- or manually- operated, tilting adjustment mechanism that allows to vary the inclination of the backrest 15 with respect to the vertical.

In the forward position, therefore, the distance of the backrest 15 from the rear bulkhead 10 of the vehicle-body 2 assumes the maximum value. In the backward position, in turn, the distance of the backrest 15 from the rear bulkhead 10 of the vehicle-body 2 assumes the minimum value.

Clearly the seat-base 14 is intended to support the user's pelvis and thighs, while the backrest 15 is intended to support the user's back.

Preferably, the or each automotive seat 11, 12 further also comprises a headrest 16 arranged on top of the backrest 15.

In the example shown, in particular, the seat-base 14 of the automotive seat 11, 12 is preferably firmly fixed on the floor 9 of the vehicle-body 2 via the interposition of the longitudinal-position adjusting mechanism.

The powertrain 4, on the other hand, is preferably an electric or hybrid powertrain of known type, and is preferably located in the front part of the vehicle-body 2, immediately upstream of the passenger compartment 3, i.e. between the front wheels 6 and upstream of the transversal front bulkhead of the vehicle-body 2.

Clearly, in a less sophisticated embodiment, the powertrain 4 may only comprise a traditional internal combustion engine.

With reference to Figures 1, 2 and 3, in addition the motor vehicle 1 further comprises, inside the passenger compartment 3 and for the or at least one of the seats located therein, a substantially vertical barrier wall 20, which extends between the backrest 15 of the seat and the rear bulkhead 10 of the vehicle-body 2, so as to prevent, or at least hinder/limit, the air circulation in the gap or empty space between the backrest 15 of the seat 11 or 12 and the rear bulkhead 10. Preferably, though not necessarily, the barrier wall 20 moreover has an air-permeable structure.

More in detail, the barrier wall 20 is preferably structured so as to extend in a bridge-like manner between the backrest 15 of the seat 11 or 12 and the rear bulkhead 10 of the vehicle-body 2, so as to connect, advantageously substantially seamlessly, the backrest 15 to the rear bulkhead 10.

In other words, the barrier wall 20 preferably extends for the entire width of the gap or empty space between the backrest 15 of the seat 11 or 12 and the rear bulkhead 10 of the vehicle-body 2.

Preferably, the upper edge of the barrier wall 20 is furthermore substantially horizontally aligned with the top of the backrest 15 of the seat 11 or 12 or with its headrest 16.

In addition, the barrier wall 20 is preferably substantially parallel to the vehicle vertical midplane, and is preferably suspended above the floor 9, advantageously at a height h from the floor 9 ranging between 0 and 30 cm (centimetres) .

In other words, the barrier wall 20 is preferably suspended above the floor of the passenger compartment 3.

Preferably, the barrier wall 20 is moreover integrated into the rear bulkhead 10 of the vehicle-body 2.

In the example shown, in particular, the motor vehicle 1 is preferably provided with a barrier wall 20 for each automotive seat 11, 12 present in the passenger compartment 3.

With reference to Figures 2 and 3, in particular, the barrier wall 20 preferably includes a roller curtain 21 with a width advantageously ranging between 50 and 100 cm (centimetres), which preferably has the winding roller 22 firmly fixed to the rear bulkhead 10 of the vehicle-body 2, advantageously in a substantially vertical position and/or advantageously inside an oblong niche 22a specially made in the same rear bulkhead 10.

The ribbon-like cloth 23 of the roller curtain 21, on the other hand, is fixed/attached to the backrest 15 of the seat 11 or 12, advantageously in a removable manner. Preferably, though not necessarily, the ribbon-like cloth 23 of the roller curtain 2 furthermore has an air-permeable structure.

More in detail, the end flap 23a of the cloth 23 of the roller curtain 21 is preferably locally substantially tangent to the backrest 15 of the seat 11 or 12, and is preferably fixed in manually removable manner to the backrest 15 of the seat 11 or 12, advantageously by means of Velcro, buttons (e.g. snap or magnetic buttons) or other manually operated coupling systems.

Preferably, the winding roller 22 of the roller curtain 21 is furthermore provided with an advantageously spring- or electrically- operated, return mechanism, which is adapted to keep the cloth 23 of the roller curtain 21 taut between the backrest 15 of the seat 11 or 12 and the rear bulkhead 10 of the vehicle-body 2.

Clearly, in a different embodiment the barrier wall 20 may be integrated into the backrest 15 of the seat 11 or 12.

More in detail, the winding roller 22 of the roller curtain 21 may be attached or incorporated in the backrest 15 of the seat 11 or 12, while the end flap 23a of the cloth 23 of the roller curtain 21 may be fixed, advantageously in a removable manner, to the rear bulkhead 10 of the vehicle-body 2.

Operation of the motor vehicle 1 is easily inferable from the above and does not require further explanation.

As regards instead the barrier wall 20, experimental tests in the wind tunnel have shown that the barrier wall 20 is extremely effective in limiting the air circulation in the empty space between the backrest 15 of the seat 11 or 12 and the rear bulkhead 10 of the vehicle-body 2, and thus succeeds in preventing formation of swirling airflows around the backrest 15 of the automotive seat(s) 11 and/or 12 when they are arranged by the user in the forward position.

The advantages connected with the presence of the barrier wall(s) 20 are noteworthy.

The barrier wall(s) 20 make it comfortable to stay in the passenger compartment 3 even for people of short stature, who are known to have to place the seat 11 and/or 12 in the forward position.

It is finally clear that modifications and variations may be made to the motor vehicle 1 and/or to the automotive seats 11 and/or 12 described above without however departing from the scope of the present invention.

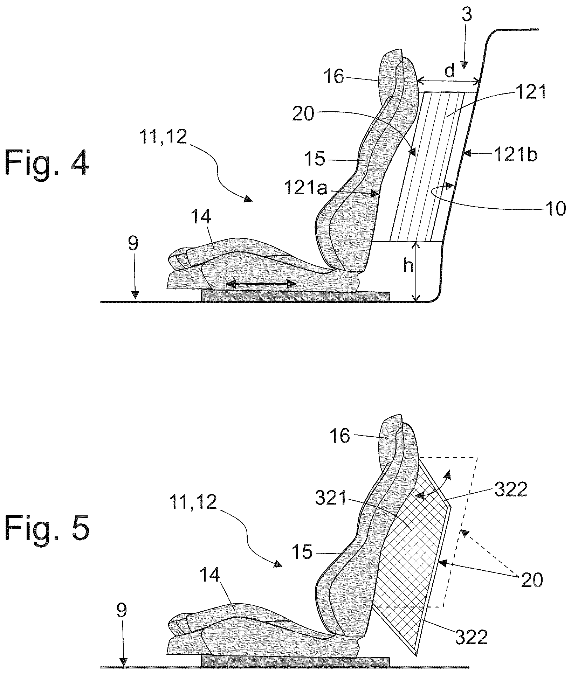

For example, with reference to Figure 4, in a first alternative embodiment, the barrier wall 20 includes a panel 121 with a foldable structure, which is fixed on one side to the backrest 15 of the seat 11 or 12, and on the other to the rear bulkhead 10 of the vehicle-body 2.

In other words, the panel 121 is arranged in a substantially vertical position behind the backrest 15 of the seat 11 or 12, and has the two opposite vertical edges 121a and 121b firmly fixed one to the backrest 15 of the seat 11 or 12, and the other to the rear bulkhead 10 of the vehicle-body 2.

Alternatively, the barrier wall 20 may be integrated/ incorporated (only) into the automotive seat 11 or 12.

More in detail, the barrier wall 20 may be stably fixed to the backrest 15 of the seat 11 or 12, and be structured so as to extend cantilevered from the backrest 15 in the opposite direction to the seat-base 14, i.e. towards the rear bulkhead 10 of the vehicle-body 2.

With reference to Figure 5, in a second alternative embodiment, the automotive seat 11 and/or 12 may be provided with a barrier wall 20 which preferably comprises: a suitably shaped cloth 321, which has a side edge fixed, in a substantially vertical position, on the backrest 15 of the seat 11 and/or 12; and a foldable support frame 322, which supports the cloth 221 and keeps it in a substantially vertical position, behind the backrest 15 of the seat 11 and/or 12.

Preferably, the foldable support frame 322 is moreover provided with a spring extension mechanism (not visible in the figure), which is adapted to elastically keep the cloth 321 fully unfolded and, advantageously, resting on or, in any case, skimming the rear bulkhead 10 of the vehicle-body 2.

In more detail, in the example shown, the foldable support frame 322 preferably has an articulated parallelogram structure, and the spring extension mechanism is preferably structured so as to elastically keep the arms of the parallelogram in a substantially horizontal position.

## Claims

1. A road-use motor vehicle (1) comprising: a vehicle-body (2) which is provided with a plurality of ground resting wheels (6, 7) and a passenger compartment (3) open at the top; and at least one seat (11, 12), which is located within the passenger compartment (3) and is adapted to accommodate and support a person in a seated position;
the seat (11, 12) being provided with a substantially horizontal seat-base (14) and a backrest (15), which rises from the rear edge of the seat-base (14) in the nearby of a rear bulkhead (10) of the vehicle-body (2), which contributes to delimiting said passenger compartment (3);
the motor vehicle (1) being **characterised by** additionally comprising a barrier wall (20), which extends between the backrest (15) of the seat (11, 12) and the rear bulkhead (10) of the vehicle-body (2), so as to hamper the air circulation in the empty space between the same backrest (15) and the rear bulkhead (10).

2. Motor vehicle according to Claim 1, wherein said barrier wall (20) is substantially vertical.

3. Motor vehicle according to Claim 1 or 2, wherein the upper edge of said barrier wall (20) is substantially horizontally aligned with the top of said backrest (15) of the seat (11, 12) or with its headrest (16).

4. Motor vehicle according to Claim 1, 2 or 3, wherein said barrier wall (20) is suspended above the floor (9) of the passenger compartment (3).

5. Motor vehicle according to any one of the preceding claims, wherein said barrier wall (20) is substantially parallel to the vehicle vertical midplane.

6. Motor vehicle according to any one of the preceding claims, wherein said barrier wall (20) is incorporated in said rear bulkhead (10) or in the backrest (15) of said seat (11, 12).

7. Motor vehicle according to any one of the preceding claims, wherein said barrier wall (20) comprises a roller curtain (21), which has the winding roller (22) firmly fixed to the rear bulkhead (10) of the vehicle-body (2) or to the backrest (15) of the seat (11, 12).

8. Motor vehicle according to any one of Claims 1 to 6, wherein said barrier wall (20) comprises a panel (121) with a foldable structure, which is fixed on one side to the backrest (15) of said seat (11, 12), and on the other side to said rear bulkhead (10).

9. Automotive seat (11, 12) comprising: a substantially horizontal seat-base (14); and a backrest (15), which rises from the rear edge of the seat-base (14);
the automotive seat (11, 12) being **characterised by** additionally comprising a barrier wall (20), which is fixed to the backrest (15) on the opposite side to the seat-base (14), and is adapted to extend cantilevered towards a rear bulkhead (10) of the passenger compartment (3) of the motor vehicle, so as to hamper the air circulation in the empty space between the backrest (15) itself and said rear bulkhead (10).

10. Automotive seat according to Claim 9, wherein said barrier wall (20) is substantially vertical and/or is movable relative to the backrest (15).

11. Automotive seat according to Claim 9 or 10, wherein said barrier wall (20) comprises a roller curtain (21), which has the winding roller (22) fixed to said backrest (15).
